# EUROPÄISCHE PATENTSCHRIFT

(11) **EP 0 375 858 B1**
(45) Veröffentlichungstag und Bekanntmachung des Hinweises auf die Patenterteilung: **30.06.1993**
(21) Anmeldenummer: 89118963.1
(22) Anmeldetag: 12.10.1989
(51) Int. Cl.: B01J 2/00, C11D 17/00

(54) **Verfahren zum kontinuierlichen Granulieren**
Continuous-granulating process
Procédé de granulation continue

(30) Priorität: 27.12.1988 DE 3844025
(43) Veröffentlichungstag der Anmeldung: 04.07.1990
(73) Patentinhaber: Henkel Kommanditgesellschaft auf Aktien, 40191 Düsseldorf (DE)
(72) Erfinder: Wilms, Elmar, Dr., D-4047 Dormagen 5 (DE); Wiemer, Frank, D-4006 Erkrath (DE)

(56) Entgegenhaltungen:
- EP-A- 0 149 264
- DE-A- 3 617 756

## Beschreibung

Die Erfindung betrifft ein Verfahren zum kontinuierlichen Granulieren eines mindestens einen Feststoff und mindestens eine zur Gelbildung neigenden Flüssigkeit enthaltenden Gemisches.

Ein solches Granulieren findet z. B. bei der Herstellung von Waschmitteln Anwendung. Ein solches Granulat wurde bisher folgendermaßen hergestellt: Die flüssigen Inhaltsstoffe wurden auf einen durch Sprühtrocknung hergestellten granulierten Träger aufgedüst oder über ein Granulationsverfahren in eine vorgefertigte Rezeptur eingearbeitet. Feste Inhaltsstoffe wurden dagegen entweder zu einem Slurry angeteigt und sprühgetrocknet oder direkt als Pulver zugemischt.

Da beim Granulationsverfahren immer dann Probleme auftraten, wenn Flüssigkeiten oder Flüssigkeitsgemische zur Gelbildung neigten, wurde eine solche Gelbildung möglichst vermieden.

Nach der deutschen Patentanmeldung P 38 35 918.9 der Henkel KGaA vom 21.10.1988 wurde überraschend gefunden, daß trockene und rieselfähige Granulate erhalten werden können, wenn man die zur Gelbildung neigende Flüssigkeit zunächst vollständig gelieren läßt und erst danach Feststoffe, wie z. B. sprühgetrockneten Zeolith, Bentonit, oder andere vorwiegend unpolare bzw. wenig polare Feststoffe zumischt. Diese Reihenfolge kann auch umgekehrt werden.

Der Erfindung liegt die Aufgabe zugrunde, ein Verfahren der eingangs genannten Art zu schaffen, welches mit einer gelartigen Zwischenphase arbeitet und kontinuierlich betrieben werden kann.

Diese Aufgabe wird erfindungsgemäß bei einem Verfahren der eingangs genannten Art dadurch gelöst, daß als die gel-bildende Flüssigkeit eine Mischung aus flüssigen Rohstoffen verwendet wird, die für sich allein kein gel bilden, daß diese Flüssigkeit in einem statischen Mischer hergestellt wird, wobei die mittlere Verweilzeit in diesem Mischer kleiner als die Gelierzeit ist, daß man die Flüssigkeit danach in einem Rührkessel gelieren läßt, wobei die mittlere Verweilzeit im Rührkessel größer als die Gelierzeit ist, und daß erst dann die erhaltene hochviskose Masse zusammen mit dem Feststoff granuliert wird.

Erfindungsgemäß ist damit sichergestellt, daß die Gelierung nicht im statischen Mischer und auch nicht im Granuliergerät, sondern nur im Rührkessel erfolgt. Zur Gilbildung wird ein Rührkessel verwendet, in den die Flüssigkeit kontinuierlich eintritt und aus dem kontinuierlich die hochviskose Masse ausgetragen wird. Gerührt wird deshalb, damit sich im Kessel und innerhalb der schon gelartig erstarrten Masse kein Flüssigkeitskanal bildet, durch den die Flüssigkeit wieder aus dem Kessel austritt, ohne daß die notwendige Verweilzeit zum Gelieren erreicht worden ist. Der statische Mischer besteht im wesentlichen aus einem rohrförmigen Kanal, in den einzelne Verwirbelungselemente fest eingebaut sind. Beim Durchströmen der Flüssigkeit durch dieses rohrförmige Element wird diese innig durchmischt.

Um zu gewährleisten, daß die mittlere Verweilzeit im Rührkessel größer als die Gelierzeit ist, wird vorgeschlagen, daß die Durchflußrate der Flüssigkeit durch den Rührkessel sowie die Rührerform und die Rührerdrehzahl derart auf den Behälterinhalt abgestimmt sind. Bei günstiger Wahl der Rührerform und der Rührerdrehzahl läßt sich trotz einer nicht kleinen Durchflußmenge eine große mittlere Verweilzeit trotz eines geringen Behälterinhalts erreichen.

Besonders günstig ist es, wenn die Flüssigkeit am Boden des Rührkessels eintritt und das Gel im oberen Bereich des Rührkessels ausgetragen wird.

Da die Viskosität des Gels temperaturabhängig ist, kann diese Viskosität dadurch beeinflußt werden, daß ein kühl-/oder heizbarer Rührkessel verwendet wird.

Vorteilhaft ist ferner, wenn die hochviskose Paste nur kurze Wege zwischen dem Rührkessel und dem Granuliergerät zurücklegen muß, da diese Paste nur sehr schlecht pumpfähig ist.

Um zu vermeiden, daß die Mischung innerhalb des Granuliergeräts in der Nähe der Eintrittsöffnungen an den Wandungen anbackt, wird vorgeschlagen, daß beim Granulieren mindestens einer der Feststoffe vorgelegt wird. Wird erst später das Gel zugegeben, so treten Probleme des Anbackens nicht auf. Das Schüttgewicht läßt sich über die Granulierzeit im Granuliergerät einstellen.

Für die Erfindung ist kein besonderes Granuliergerät erforderlich. Alle handelsüblichen Granuliergeräte (auch z. B. kontinuierliche Befeuchtungsmischer) sind zum Ausüben der Erfindung geeignet. Besonders vorteilhaft ist jedoch, wenn zum Granulieren ein Pflugscharmischer verwendet wird. Insbesondere ist es vorteilhaft, wenn zum Granulieren das Gel unmittelbar nach seinem Eintritt in das Granuliergerät zerhackt und anschließend mit dem Feststoff verwirbelt wird. Durch das anfängliche Zerhacken wird sehr bald nach dem Eintritt des Gels in das Granuliergerät eine geringe Teilschengröße erreicht. Dadurch bleibt die Masse im Granuliergerät rieselfähig und backt nicht zu einem großen Klumpen zusammen.

Insbesondere ist es vorteilhaft, wenn als zur Gelbildung neigenden Flüssigkeit ein Gemisch aus nichtionischen Tensiden und wasserenthaltenden bzw. wasserabspaltenden Substanzen wie z.B. Wasserglas oder Zeolithsuspension verwendet wird. Ferner ist es günstig, wenn als Feststoff sprühgetrocknetes Zeolith und/oder ein Schichtsilikat, insbesondere Bentonit bzw. Feststoffgemische aus vorzugsweise unpolaren bzw. wenige polaren Substanzen verwendet wird.

Erfindungsgemäß wird das Gel durch die dem Rührkessel zugeführten Flüssigkeiten frei fließend oder mit den entsprechenden Dosierorganen in das Granuliergerät zum Herstellen der Granulate zusammen mit eindosierten Feststoffen kontinuierlich eingetragen und granuliert.

### Beispiel

Die Erfindung wird näher an einem nachfolgenden Beispiel erläutert. Zur Gelbildung werden 30 bis 50 Teile Niotensid, z.B. Dehydol LST, bis zu 20 Teile Wasserglaslösung, z.B. Wasserglas N, sowie 40 bis 60 Teile Zeolithsuspension verwendet. Zum Bilden des Granulats werden 35 bis 55 Teile des beschriebenen Gels und 65 bis 45 Teile Feststoffe bzw. Feststoffgemische eingesetzt. Diese Feststoffe bestehen aus sprühgetrockneten Zeolith, z.B. Wessalith P, bzw. Bentonit, bzw. einem Gemisch aus Zeolith und Bentonit. Es kann sich dabei auch um ein Gemisch aus 30 bis 70 Teilen Zeolith, 10 bis 40 Teilen Bentonit und 10 bis 30 Teilen Soda handeln. Die Mengenverhältnisse sind variabel. Soda sollte allerdings nicht mehr als 30 Teile im Feststoffgemisch ausmachen.

Als ein spezielles Beispiel wird ein Gel aus 20 Teilen Niotensid, 10 Teilen Wasserglas und 20 Teilen Zeolithsuspension offenbart, zu dem 50 Teile sprühgetrockneter Zeolith zugefügt werden. Damit wird ein Schüttgewicht von 840 g/l erhalten, das gut rieselfähig ist.

## Patentansprüche

1. Verfahren zum kontinuierlichen Granulieren eines mindestens einen Feststoff und mindestens eine gelbildende Flüssigkeit enthaltenden Gemisches,
dadurch gekennzeichnet,
daß als die gelbildende Flüssigkeit eine Mischung aus flüssigen Rohstoffen verwendet wird, die für sich allein kein gel bilden, daß diese Flüssigkeit in einem statischen Mischer hergestellt wird, wobei die mittlere Verweilzeit in diesem Mischer kleiner als die Gelierzeit ist, daß man die Flüssigkeit danach in einem Rührkessel gelieren läßt, wobei die mittlere Verweilzeit im Rührkessel größer als die Gelierzeit ist, und daß erst dann die erhaltene hochviskose Phase zusammen mit dem Feststoff granuliert wird.

2. Verfahren nach Anspruch 1,
dadurch gekennzeichnet,
daß die Durchflußrate der Flüssigkeit durch den Rührkessel sowie die Rührerform und die Rührerdrehzahl derart auf den Behälterinhalt abgestimmt sind, so daß die mittlere Verweilzeit im Rührkessel größer als die Gelierzeit ist.

3. Verfahren nach Anspruch 1 oder 2,
dadurch gekennzeichnet,
daß die Flüssigkeit am Boden des Rührkessels eintritt und das Gel im oberen Bereich des Rührkessels ausgetragen wird.

4. Verfahren nach einem der Ansprüche 1 bis 3,
dadurch gekennzeichnet,
daß ein kühl- und/oder heizbarer Rührkessel verwendet wird.

5. Verfahren nach einem der Ansprüche 1 bis 4,
dadurch gekennzeichnet,
daß beim Granulieren mindestens einer der Feststoffe vorgelegt wird.

6. Verfahren nach einem der Ansprüche 1 bis 5,
dadurch gekennzeichnet,
daß zum Granulieren ein Pflugscharmischer verwendet wird.

7. Verfahren nach einem der Ansprüche 1 bis 6,
dadurch gekennzeichnet,
daß zum Granulieren das Gel unmittelbar nach seinem Eintritt in das Granuliergerät zerhackt und anschließend mit dem Feststoff verwirbelt wird.

8. Verfahren nach einem der Ansprüche 1 bis 7,
dadurch gekennzeichnet,
daß als gelbildende Flüssigkeit ein Gemisch aus nichtionischen Tensiden und wasserenthaltenden bzw. wasserabspaltenden Substanzen verwendet wird.

9. Verfahren nach einem der Ansprüche 1 bis 8,
dadurch gekennzeichnet,
daß als Feststoff sprühgetrocknetes Zeolith, ein Schichtsilikat, insbesondere Bentonit, oder Feststoffgemische aus unpolaren Substanzen verwendet werden.

## Claims

1. A process for the continuous granulation of a mixture containing at least one solid and at least one liquid capable of gelation, characterized in that a mixture containing liquid raw materials, which do not individually form gels, is used as the liquid capable of gelation, in that this liquid is prepared in a static mixer in which the average residence time is shorter than the gelation time, the liquid is then left to gel in a stirred vessel, in which the average residence time is longer than the gelation time, and in that only then is the highly viscous mass obtained granulated together with the solid.

2. A process as claimed in claim 1, characterized in that the throughflow rate of the liquid through the stirred vessel and also the form and speed of the stirrer are adapted to the capacity of the container so that the average residence time in the stirred vessel is longer than the gelation time.

3. A process as claimed in claim 1 or 2, characterized in that the liquid enters at the botton of the stirred vessel and the gel is discharged from the upper part of the stirred vessel.

4. A process as claimed in any of claims 1 to 3, characterized in that a coolable and/or heatable stirred vessel is used.

5. A process as claimed in any of claims 1 to 4, characterized in that at least one of the solids is initially introduced during granulation.

6. A process as claimed in any of claims 1 to 5, characterized in that a ploughshare mixer is used for granulation.

7. A process as claimed in any of claims 1 to 6, characterized in that, for granulation, the gel is cut up immediately after entering the granulator and is then whirled around with the solid.

8. A process as claimed in any of claims 1 to 7, characterized in that a mixture of nonionic surfactants and water-containing or water-eliminating substances is used as the liquid capable of gel formation.

9. A process as claimed in any of claims 1 to 8, characterized in that spray-dried zeolite, a layer silicate, particularly bentonite, or solids mixtures of apolar substances are used as the solid.

## Revendications

1. Procédé de granulation continue d'un mélange contenant au moins une substance solide et au moins un liquide formant un gel, caractérisé en ce que
- on utilise comme liquide formant un gel un mélange de matières premières liquides, qui pour elles seules ne forment aucun gel ;
- ce liquide est préparé dans un mélangeur statique, le temps de séjour moyen dans ce mélangeur étant plus petit que le temps de gélification ;
- on fait gélifier le liquide ensuite dans un bac à agitation, le temps de séjour moyen dans le bac à agitation étant supérieur au temps de gélification et,
- ensuite la phase à haute viscosité obtenue est granulée avec la matière solide.

2. Procédé selon la revendication 1, caractérisé en ce que la vitesse de passage du liquide dans le bac à agitation ainsi que la forme de l'agitation et la vitesse de rotation de l'agitation sont adaptées à la contenance du réservoir, de manière que le temps de séjour moyen dans le bac à agitation soit plus grand que le temps de gélification.

3. Procédé selon la revendication 1 ou 2, caractérisé en ce que le liquide entre au fond de la cuve à agitation et le gel est évacué au niveau supérieur de la cuve à agitation.

4. Procédé suivant l'une quelconque des revendications 1 à 3, caractérisé en ce qu'on utilise une cuve à agitation pouvant être refroidie ou chauffée.

5. Procédé selon l'une quelconque des revendications 1 à 4, caractérisé en ce que pour la granulation au moins une des matières solides est produite.

6. Procédé selon l'une quelconque des revendications 1 à 5, caractérisé en ce que pour la granulation on utilise un mélangeur à soc de charrue.

7. Procédé selon l'une quelconque des revendications 1 à 6, caractérisé en ce que pour la granulation le gel est haché directement après son entrée dans l'appareil de granulation et ensuite est mis en tourbillonnement avec la matière solide.

8. Procédé selon une des revendications 1 à 7, caractérisé en ce qu'on utilise comme liquide formant un gel un mélange de tensio-actifs non ioniques et de substances contenant de l'eau ou éliminant de l'eau.

9. Procédé selon l'une quelconque des revendications 1 à 8, caractérisé en ce qu'on utilise comme matière solide de la zéolite séchée par pulvérisation, un silicate stratifié, en particulier de la bentonite, ou des mélanges de matières solides constitués de substances non polaires.
